# EUROPEAN PATENT APPLICATION

(11) **EP 4 734 595 A1**
(43) Date of publication of application: **29.04.2026**
(21) Application number: 24858546.5
(22) Date of filing: 27.08.2024
(51) Int. Cl.: H04W 24/02

(54) **METHOD AND COMMUNICATION APPARATUS**

(30) Priority: 28.08.2023 CN 202311088410
(71) Applicant: Huawei Technologies Co., Ltd., Shenzhen, Guangdong 518129 (CN)
(72) Inventor: DOU, Fenghui, Shenzhen, Guangdong 518129 (CN); XU, Haibo, Shenzhen, Guangdong 518129 (CN); ZHANG, Yunji, Shenzhen, Guangdong 518129 (CN); FAN, Liangliang, Shenzhen, Guangdong 518129 (CN)
(74) Representative: Gill Jennings & Every LLP
(86) International application number: PCT/CN2024/114674
(87) International publication number: WO 2025/045010

(57) **Abstract**

This application relates to a method and a communication apparatus. The method includes: A terminal device enters a first mode when the terminal device completes registration with a non-terrestrial mobile communication network NTN, where the terminal device does not need to initiate, in the first mode, periodic registration with a first core network device in the NTN. That the terminal device completes the registration with the NTN may be understood as that the terminal device sends, to the first core network device, a first message used for requesting registration, and receives, from the first core network device, a second message indicating that a registration request is accepted.

## Description

This application claims priority to Chinese Patent Application No. 202311088410.1, filed with the China National Intellectual Property Administration on August 28, 2023 and entitled "METHOD AND COMMUNICATION APPARATUS", which is incorporated herein by reference in its entirety.

### TECHNICAL FIELD

This application relates to the communication field, and in particular, to a method and a communication apparatus.

### BACKGROUND

In a non-terrestrial mobile communication network (non-terrestrial network, NTN) communication scenario, a terminal device is connected to an access network device and a core network device in a mobile communication network via a satellite, to implement communication. In comparison with a terrestrial mobile communication network (terrestrial network, TN), since the satellite is far away from a ground terminal, communication between the terminal device and the satellite increases power consumption of the terminal device.

### SUMMARY

Usually, a terminal device in a connection management (connection management, CM) idle (idle) state needs to initiate a periodic registration request to a core network device, to keep the terminal device in a registered state in a network. However, in an NTN communication scenario, if the terminal device periodically performs a registration update procedure, large power consumption overheads are caused to the terminal device. In addition, if the terminal device is a terminal device that performs a satellite alignment process in a manual satellite alignment manner, the terminal device cannot periodically and automatically perform the satellite alignment process (which is alternatively understood as that the terminal device does not ensure periodic initiation of registration update). Consequently, the core network considers that the terminal is unreachable, and deregisters the terminal device, affecting timeliness of a communication service of the terminal device. To resolve the foregoing technical problem, embodiments of this application provide a method and a communication apparatus, to help reduce power consumption of the terminal device in the NTN communication scenario.

According to a first aspect, this application provides a method. An example in which a terminal device performs the method is used. The method includes: A terminal device enters a first mode when the terminal device completes registration with an NTN, where the terminal device does not need to initiate, in the first mode, periodic registration with a first core network device in the NTN; or a periodicity in which the terminal device initiates, in the first mode, the periodic registration with the first core network device is a first periodicity, where the first periodicity is greater than a second periodicity, and the second periodicity is a periodicity in which the terminal device initiates periodic registration with a second core network device in a terrestrial network TN.

In the method described in the first aspect, after completing the registration with the NTN, the terminal device enters a mode in which the periodic registration does not need to be initiated with the first core device in the NTN (that is, the first mode mentioned in this application), or the terminal device enters a mode in which a periodicity of initiating the periodic registration is long. Therefore, a satellite alignment process performed due to the periodic registration can be reduced, and power consumption of the terminal device can be reduced.

In a possible implementation, the terminal device sends a first message to the first core network device, where the first message is used for requesting registration. Further, the terminal device receives a second message from the first core network device, where the second message indicates that the first core network device accepts a registration request of the terminal device.

In a possible implementation, the first message includes first information, where the first information indicates that the terminal device does not ensure that periodic registration is performed, or the first information indicates that the terminal device requests not to perform periodic registration. In this possible implementation, when initiating the registration request to the core network device (namely, the first core network device) in the NTN, the terminal device requests not to perform periodic registration. This helps reduce the power consumption of the terminal device.

In a possible implementation, the first information includes first capability information and/or second capability information, the first capability information indicates whether the terminal device has a capability of supporting NTN communication, and the second capability information indicates whether the terminal has a capability of automatic satellite alignment.

In a possible implementation, the second message includes second information, and the second information indicates that after entering the first mode, the terminal device does not need to initiate the periodic registration with the first core network device in the NTN. In this possible implementation, in a process in which the terminal device registers with the NTN, the first core network device may indicate whether the terminal device needs to initiate the periodic registration in the first mode. This helps improve flexibility of initiating the periodic registration by the terminal device in the first mode.

In a possible implementation, the second message further includes third information, the third information indicates first duration, the first duration is duration of a periodic registration timer, and the first duration is related to duration in which the terminal device subscribes to an NTN service. Further, the terminal device does not need to initiate, in the first mode, the periodic registration with the first core network device in the NTN in the first duration. In this possible implementation, in the process in which the terminal device registers with the NTN, the first core network device may indicate whether the terminal device needs to initiate the periodic registration in the first mode and a time length in which the terminal device does not need to initiate the periodic registration. This helps improve the flexibility of initiating the periodic registration by the terminal device in the first mode.

In a possible implementation, the third information indicates that a periodic registration timer is not to be activated. In this possible implementation, in the process in which the terminal device registers with the NTN, the first core network device may indicate, in a manner of indicating that the periodic registration timer is not to be activated, the terminal device not to initiate the periodic registration in the first mode. This helps improve flexibility of determining, by the terminal device in the first mode, whether to initiate the periodic registration.

In a possible implementation, the terminal device in the first mode keeps in a registered state and/or keeps no service. In this possible implementation, the terminal device in the first mode keeps in the registered state and/or keeps no service, so that the core network device does not deregister the terminal device. This helps improve timeliness of communication of the terminal device (which is alternatively understood as that this helps the terminal device perform fast communication).

In a possible implementation, the terminal device does not need to listen, in the first mode, to a paging message from the NTN. In this possible implementation, the terminal device does not listen, in the first mode, to the paging message from the NTN. This helps reduce the power consumption of the terminal device.

In a possible implementation, that the terminal device enters the first mode when the terminal device completes the registration with the non-terrestrial network NTN includes: The terminal device enters the first mode when the terminal device completes the registration and a first condition is satisfied, where the first condition includes at least one of the following: The terminal device completes data transmission via the NTN; the terminal device switches from a CM connected state to a CM idle state; the terminal device switches from a first state to a second state, where the terminal device communicates with a satellite of the NTN in the first state, and the terminal device does not communicate with the satellite of the NTN in the second state; or the terminal device stops using the NTN service. In this possible implementation, after the terminal device completes the registration with the NTN, the terminal device enters the first mode only when the terminal device does not have a requirement for the network service of the NTN (that is, the first condition is satisfied), and the terminal device does not enter the first mode when the terminal device has the requirement for the network service of the NTN. This helps ensure service reliability of the terminal device.

In a possible implementation, that the terminal device switches from the connection management CM connected state to the CM idle state includes: The terminal device switches from the CM connected state to the CM idle state, and duration in which the terminal device is in the CM idle state is greater than second duration, where the second duration is greater than 0. In this possible implementation, after the terminal device completes the registration with the NTN, the terminal device enters the first mode only when the terminal device does not have the requirement for the network service of the NTN (that is, the first condition is satisfied), and the terminal device does not enter the first mode when the terminal device has the requirement for the network service of the NTN. This helps ensure the service reliability of the terminal device.

In a possible implementation, after entering the first mode, the terminal device sends the first message to the first core network device when the terminal device switches from the second state to the first state, where the first message is used for requesting registration or requesting a service, the terminal device communicates with the satellite of the NTN in the first state, and the terminal device does not communicate with the satellite of the NTN in the second state. In this possible implementation, after entering the first mode, if the terminal device communicates with the satellite of the NTN, the terminal device may still register with the NTN or request the service. This helps ensure the service reliability of the terminal device.

In a possible implementation, after entering the first mode, the terminal device exits the first mode when a second condition is satisfied, where the second condition includes at least one of the following: The terminal device switches from the second state to the first state, where the terminal device communicates with the satellite of the NTN in the first state, and the terminal device does not communicate with the satellite of the NTN in the second state; the terminal device switches from the CM idle state to the CM connected state; or the terminal device detects that a satellite alignment operation is performed. In this possible implementation, after entering the first mode, if the terminal device has a requirement for the network service of the NTN (for example, the second condition is satisfied), the terminal device exits the first mode. This helps ensure the service reliability of the terminal device.

In a possible implementation, the first core network device serves only the NTN, or the first core network device serves the NTN and the TN.

In a possible implementation, the first core network device serves only the NTN. In this case, the terminal device sends the first message to the first core network device via the second core network device in the TN. Further, the terminal device receives the second message from the first core network device via the second core network device. In this possible implementation, flexibility of registering with the NTN by the terminal device is improved.

In a possible implementation, the first message further includes a preference for the first mode, and the second message further includes information for confirming acceptance of the preference.

In a possible implementation, that the first message further includes the preference for the first mode includes: When the terminal device does not have the capability of the automatic satellite alignment, or manual satellite alignment is selected for the terminal device to perform the satellite alignment operation, the first message further includes the preference for the first mode. In this possible implementation, power consumption of the terminal device that performs the satellite alignment operation through manual satellite alignment is reduced.

In a possible implementation, the terminal device receives at least one equivalent public land mobile network EPLMN identifier from the second core network device, where the at least one EPLMN identifier includes a public land mobile network PLMN identifier of the NTN.

In a possible implementation, the terminal device receives at least one equivalent public land mobile network EPLMN identifier from a third core network device, where the at least one EPLMN identifier includes the public land mobile network PLMN identifier of the NTN, and the third core network device is a core network device for the terminal device to register with a PLMN.

In a possible implementation, the terminal device includes a first subscriber identity module SIM card and a second SIM card, the first SIM card subscribes to a TN service, and the second SIM card subscribes to the NTN service. Further, the second SIM card sends the first message to the first SIM card; the first SIM card sends the first message to an access network device in the TN; the first SIM card receives the second message from the access network device in the TN; and the first SIM card sends the second message to the second SIM card.

According to a second aspect, this application provides a method. An example in which a first core network device in an NTN performs the method is used. The method includes: When a terminal device completes registration with the NTN, the first core network device in the NTN determines that the terminal device enters a first mode, where the terminal device does not need to initiate, in the first mode, periodic registration with the first core network device in the NTN.

For beneficial effects of the method described in the second aspect, refer to the beneficial effects of the method described in the first aspect. Details are not described herein again.

In a possible implementation, the first core network device receives a first message from the terminal device, where the first message is used for requesting registration. Further, the first core network device sends a second message to the terminal device, where the second message indicates that the first core network device accepts a registration request of the terminal device.

In a possible implementation, the first message includes first information, where the first information indicates that the terminal device does not ensure that periodic registration is performed, or the first information indicates that the terminal device requests not to perform periodic registration.

In a possible implementation, the first information includes first capability information and/or second capability information, the first capability information indicates whether the terminal device has a capability of supporting NTN communication, and the second capability information indicates whether the terminal has a capability of automatic satellite alignment.

In a possible implementation, the first core network device determines the second message based on the first information, where the second message indicates at least one of the following: information indicating whether to accept a preference; whether a periodic registration timer is activated; and duration of the periodic registration timer when the periodic registration timer is activated; or whether to perform implicit deregistration on the terminal device.

In a possible implementation, the second message includes second information, and the second information indicates that after entering the first mode, the terminal device does not need to initiate the periodic registration.

In a possible implementation, the second message further includes third information, the third information indicates first duration, the first duration is duration of the periodic registration timer, and the first duration is related to duration in which the terminal device subscribes to an NTN service. Further, the terminal device does not need to initiate, in the first mode, the periodic registration with the first core network device in the NTN in the first duration.

In a possible implementation, third information further indicates that the periodic registration timer is not to be activated.

In a possible implementation, the first core network device keeps the terminal device in the first mode in a registered state and/or for no service.

In a possible implementation, the first core network device does not need to send a paging message to the terminal device in the first mode.

In a possible implementation, that when the terminal device completes the registration with the non-terrestrial network NTN, the first core network device in the NTN determines that the terminal device enters the first mode includes: When the terminal device completes the registration with the non-terrestrial network NTN and a third condition is satisfied, the first core network device in the NTN determines that the terminal device enters the first mode, where the third condition includes one or more of the following: The terminal device switches from a connection management CM connected state to a CM idle state; the terminal device does not use a network service of the NTN in third duration, where the third duration is greater than 0; or paging the terminal device by the first core network device fails.

In a possible implementation, that the terminal device switches from the connection management CM connected state to the CM idle state includes: The terminal device switches from the CM connected state to the CM idle state, and duration in which the terminal device is in the CM idle state is greater than second duration, where the second duration is greater than 0.

In a possible implementation, after determining that the terminal device enters the first mode, the first core network device receives the first message from the terminal device, where the first message is used for requesting registration or requesting a service.

In a possible implementation, when a fourth condition is satisfied, the first core network device determines that the terminal device exits the first mode, where the fourth condition includes one or more of the following: The first core network device receives the first message from the terminal device, where the first message is used for requesting registration or requesting a service; or the terminal device switches from the CM idle state to the CM connected state.

In a possible implementation, the first core network device serves only the NTN, or the first core network device serves the NTN and a TN.

In a possible implementation, the first core network device receives the first message from the terminal device via a second core network device in the TN; and the first core network device sends the second message to the terminal device via the second core network device.

In a possible implementation, the first message further includes the preference for the first mode, and the second message further includes information for confirming acceptance of the preference.

According to a third aspect, this application provides a communication apparatus. For example, the communication apparatus may be a terminal device, an apparatus in the terminal device, or an apparatus that can be used in combination with the terminal device. For example, the communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing functions. The unit or the module may be software and/or hardware. For an operation performed by the communication apparatus and beneficial effects, refer to the method and the beneficial effects in the first aspect.

According to a fourth aspect, this application provides a communication apparatus. The communication apparatus may be a core network device, an apparatus in the core network device, or an apparatus that can be used in combination with the core network device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing functions. The unit or the module may be software and/or hardware. For an operation performed by the communication apparatus and beneficial effects, refer to the method and the beneficial effects in the second aspect.

According to a fifth aspect, this application provides a communication apparatus. The communication apparatus includes a processor and an interface circuit, where the interface circuit is configured to: receive a signal from a communication apparatus other than the communication apparatus and transmit the signal to the processor, or send a signal from the processor to a communication apparatus other than the communication apparatus; and the processor implements the method according to the first aspect or the method according to the second aspect through a logic circuit or by executing code instructions.

According to a sixth aspect, this application provides a computer-readable storage medium. The storage medium stores a computer program or instructions, and when the computer program or the instructions are executed by a communication apparatus, the method according to the first aspect or the method according to the second aspect is implemented.

According to a seventh aspect, this application provides a computer program product including instructions. When a communication apparatus reads and executes the instructions, the method according to the first aspect or the method according to the second aspect is implemented.

According to an eighth aspect, this application provides a communication system. The communication system includes a communication apparatus configured to perform the method according to the first aspect, and a communication apparatus configured to perform the method performed by the core network device described in the second aspect.

### BRIEF DESCRIPTION OF DRAWINGS

FIG. 1 is a diagram of a network system architecture according to an embodiment of this application;
FIG. 2 is a diagram of a CN structure according to an embodiment of this application;
FIG. 3a is a diagram of a transparent satellite architecture according to an embodiment of this application;
FIG. 3b is a diagram of a regenerative satellite architecture according to an embodiment of this application;
FIG. 3c is a schematic flowchart of implicit deregistration according to an embodiment of this application;
FIG. 4 is a schematic flowchart of a method according to an embodiment of this application;
FIG. 5 is a diagram of a procedure of registering with an NTN by a terminal device according to an embodiment of this application;
FIG. 6 is a diagram of third information according to an embodiment of this application;
FIG. 7 is a diagram of another procedure of registering with an NTN by a terminal device according to an embodiment of this application;
FIG. 8 is a diagram of still another procedure of registering with an NTN by a terminal device according to an embodiment of this application;
FIG. 9a is a diagram of still another procedure of registering with an NTN by a terminal device according to an embodiment of this application;
FIG. 9b is a diagram of still another procedure of registering with an NTN by a terminal device according to an embodiment of this application;
FIG. 10 is a diagram of still another procedure of registering with an NTN by a terminal device according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

Terms "first", "second", and the like in the specification, claims, and accompanying drawings of this application are used to distinguish between different objects, but are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It should be understood that embodiments described in this specification may be combined with other embodiments.

To facilitate specific understanding of embodiments of this application, the following first describes a system architecture in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, new radio (new radio, NR), a 5th generation (5th generation, 5G) communication system like a 3rd generation partnership project (3rd generation partner project, 3GPP) service-based network architecture (service-based architecture, SBA), or a communication system evolved after 5G like a 6th generation (6th generation, 6G) communication system.

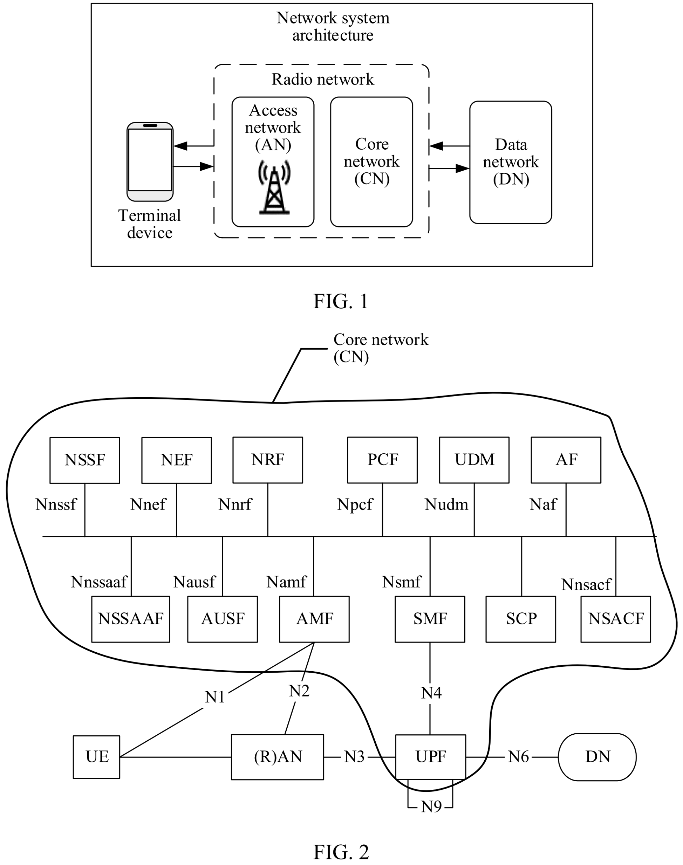

FIG. 1 is a diagram of a network system architecture according to an embodiment of this application. As shown in FIG. 1, a terminal device may access a radio network, to obtain a service of an external network (for example, a data network (data network, DN)) through the radio network or communicate with another device, for example, another terminal device, through the radio network. The radio network includes a (radio) access network ((radio) access network, (R)AN) and a core network (core network, CN). The (R)AN (described as a RAN below) is configured to connect the terminal device to the radio network, and the CN is configured to manage the terminal device and provide a gateway for communicating with the DN. The following separately describes in detail the terminal device, the RAN, the CN, and the DN in the system architecture in FIG. 1.

### 1. Terminal device

The terminal device includes a device that provides voice and/or data connectivity for a user. For example, the terminal device is a device that has a wireless transceiver function; and may be deployed on land, where the deployment includes indoor, outdoor, handheld, wearable, or vehicle-mounted deployment, may be deployed on water (for example, on a ship), or may be deployed in the air (for example, on an airplane, a balloon, and a satellite). The terminal device may be a mobile phone (mobile phone), a pad (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a UE unit, a UE station, a mobile station, a remote station, a remote terminal, a mobile device, a UE terminal, a wireless communication device, a UE proxy, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform). The terminal device in this application may be a 5G terminal, or may be a 6G terminal. This is not limited in this application.

2. RAN

The RAN may include one or more RAN devices (or access network devices). An interface between an access network device and a terminal device may be a Uu interface (or referred to as an air interface). Certainly, in communication evolved after 5G, names of these interfaces may remain unchanged, or may be replaced with other names. This is not limited in this application.

The access network device is a node or a device that connects the terminal device to the radio network. The access network device includes, for example, but is not limited to, a next generation NodeB (next generation NodeB, gNB) in a 5G communication system, an evolved NodeB (evolved NodeB, eNB), a next generation evolved NodeB (next generation eNB, ng-eNB), a radio backhaul device, a radio network controller (radio network controller, RNC), a NodeB (NodeB, NB), a home base station ((home evolved NodeB, HeNB) or (home NodeB, HNB)), a baseband unit (baseband unit, BBU), a transmitting and receiving point (transmitting and receiving point, TRP), a transmitting point (transmitting point, TP), a mobile switching center, or a device that functions as a base station in device-to-device (device-to-device, D2D), vehicle-to-everything (vehicle-to-everything, V2X), machine-to-machine (machine-to-machine, M2M) communication; or may include a central unit (central unit, CU) and a distributed unit (distributed unit, DU) in a cloud access network (cloud radio access network, C-RAN) system, a network device that is in a non-terrestrial network (non-terrestrial network, NTN) communication system and that may be deployed on a high-altitude platform or a satellite, or the like. This is not specifically limited in embodiments of this application. The RAN in this application may be a 5G RAN, or may be a 6G RAN. This is not limited in this application.

### 3. CN

The CN may include one or more CN devices (which may be understood as network element devices or network function (network function, NF)). In the following, the CN device is collectively referred to as a core network device (for example, a first core network device and a second core network device in the following).

FIG. 2 is a diagram of a CN structure according to this application. The CN in FIG. 2 is a diagram of a CN in a 5G network architecture. The CN shown in FIG. 2 includes a plurality of CN devices: a network slice selection function (network slice selection function, NSSF), a network exposure function (network exposure function, NEF), a network repository function (network repository function, NRF), a policy control function (policy control function, PCF), a unified data management (unified data management, UDM), an application function (application function, AF), a network control function (network control function, NCF), a network slice specific authentication and authorization function (network slice specific authentication and authorization function, NSSAAF), an authentication server function (authentication server function, AUSF), an access and mobility management function (access and mobility management function, AMF), a session management function (session management function, SMF), a user plane function (user plane function, UPF), a service communication proxy (service communication proxy, SCP), and a network slice admission control function (Network Slice Admission Control Function, NSACF).

The AMF is a control plane function provided by an operator network, and is responsible for access control and mobility management for accessing the operator network by a terminal device, for example, including functions such as mobility state management, allocation of a temporary user identity, and user authentication and authorization.

The SMF is a control plane function provided by the operator network, and is responsible for managing a protocol data unit (protocol data unit, PDU) session of the terminal device. The PDU session is a channel for PDU transmission, and the terminal device and the DN need to perform PDU transmission with each other through the PDU session. The SMF is responsible for establishment, maintenance, deletion, and the like of the PDU session. The SMF includes functions related to a session, for example, session management (for example, session establishment, modification, and release, including tunnel maintenance between the UPF and the RAN), selection and control of the UPF, service and session continuity (service and session continuity, SSC) mode selection, and roaming.

The PCF is a control plane function provided by an operator, including a user subscription data management function, a policy control function, a charging policy control function, quality of service (quality of service, QoS) control, and the like, and is mainly configured to provide the PDU session policy for the SMF. The policy may include a charging-related policy, a QoS-related policy, an authorization-related policy, and the like.

The UPF is a gateway provided by the operator and a gateway for communication between the operator network and the DN. The UPF includes user plane-related functions such as data packet routing and transmission, packet detection, quality of service (quality of service, QoS) handling, uplink packet detection, and downlink data packet storage.

The UDM is mainly configured to: manage subscription data and authentication data of a user, and perform authentication credit processing, user identification handling, access authorization, registration/mobility management, subscription management, short message service management, and the like. In some embodiments, the UDM may further include a unified data repository (unified data repository, UDR). Alternatively, in some other embodiments, a 3GPP SBA in a 5G system may further include a UDR. The UDR is configured to: store and retrieve a PCF policy, store and retrieve structured data for exposure, store user information requested by the application function, and the like.

The NRF is mainly configured to perform registration, management, and status detection on other NFs to implement automatic management of all NFs. When each NF is started, the NF needs to be registered with the NRF to provide a service. Registration information includes an NF type, address, and service list, and the like.

The NEF is mainly configured to support secure interaction between a network and a third-party application. The network may securely expose a network capability and an event to a third party by using the NEF, to enhance or improve quality of service of the application. In addition, the network may securely obtain related data from the third party by using the NEF, to enhance intelligent decision-making of the network. In addition, the NEF supports restoring the structured data from the UDR or storing the structured data in the UDR.

The AF is mainly configured to support interaction with the core network to provide a service, for example, influence on data routing decision-making and a policy control function, or providing some third-party services for a network side.

The CN devices may also be referred to as network elements or f network function. In a 5G communication system, network function may be names of the network function shown in FIG. 2. In a communication system evolved after 5G (for example, a 6G communication system), network function may still be the names of the network function shown in FIG. 2, or may have other names. For example, in the 5G communication system, the policy control network element may be the PCF. In the communication system evolved after 5G (for example, the 6G communication system), the policy control function may still be the PCF, or may have another name. This is not limited in this application.

In FIG. 2, Npcf, Nudm, Naf, Namf, Nsmf, N1, N2, N3, N4, and N6 are interface sequence numbers. For meanings of these interface sequence numbers, refer to meanings defined in related standard protocols. This is not limited herein.

### 4. DN

The DN, also be referred to as a packet data network (packet data network, PDN), is a network located outside an operator network. The operator network may access a plurality of DNs. Application servers corresponding to a plurality of services may be deployed in the DN, to provide a plurality of possible services for a terminal device.

It should be noted that the system architecture shown in FIG. 1 is merely an example, and cannot be considered as a specific limitation on the technical solutions of this application.

For ease of understanding related content in embodiments of this application, the following further explains and describes some terms in embodiments of this application. This part is merely for ease of understanding, and cannot be considered as a disclosure or a specific limitation of the technical solutions of this application.

### 1. NTN

The NTN is a communication system in which a non-terrestrial network device (for example, a ship, a high-altitude platform, an uncrewed aerial vehicle, or a satellite) provides a communication service (for example, wireless access or backhaul) for a terminal device, to implement seamless communication coverage, and improve reliability of the communication system. For example, a 5G NTN system, or referred to as an NR NTN system, and a future 6G NTN system can help satisfy a requirement for wireless connection anytime and anywhere by providing wider area coverage and ensuring service availability, continuity, and scalability. It should be noted that, for ease of understanding, the following uses only an example in which the non-terrestrial network device in the NTN is the satellite for description, and should not be considered as a specific limitation on this application.

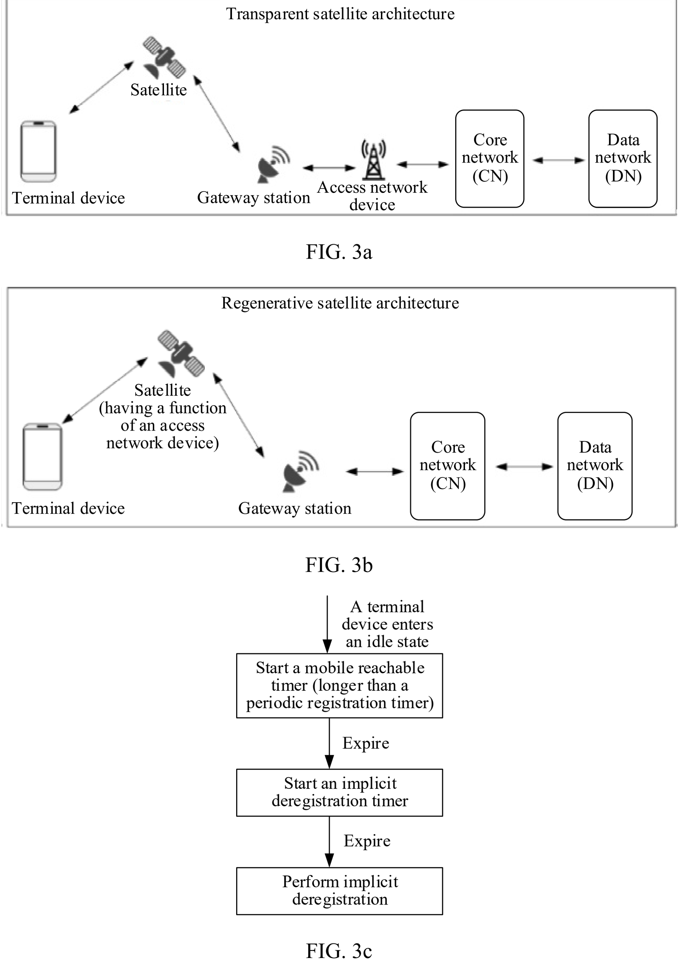

When the non-terrestrial network device is the satellite, a low Earth orbit (low earth orbit, LEO) satellite, a medium Earth orbit (middle earth orbit, MEO) satellite, and a geostationary earth orbit (geosynchronous earth orbit, GEO) satellite are related. For different access modes provided by the NTN, functions of the satellite may also be different. For example, in a transparent satellite (transparent satellite) architecture shown in FIG. 3a, a satellite provides an access technology for connecting a terminal device to a terrestrial network. A function of the satellite is to perform radio frequency filtering, and perform frequency conversion and amplification. To be specific, in the transparent satellite architecture, the satellite mainly serves as a Layer 1 (L1 for short) relay device between a terminal and a terrestrial base station, and is configured to regenerate a physical layer signal (that is, perform processing of the radio frequency filtering and the frequency conversion and amplification), and there are no other higher protocol layers. In a regenerative satellite (regenerative satellite) architecture shown in FIG. 3b, some or all functions of a base station are integrated into a satellite. It should be noted that, in the regenerative satellite architecture, the some or all the functions of the base station and some or all functions of a core network may alternatively be integrated into the satellite, to provide a shorter transmission delay.

Usually, the satellite in the NTN communicates with the terrestrial network (including an access network device and/or a core network device) through a gateway station (a gateway station shown in FIG. 3a or FIG. 3b). The gateway station (which may also be referred to as a ground station) mentioned in this application may be understood as a gateway in the NTN.

### 2. Satellite alignment process of a terminal device

In an NTN communication scenario, because a distance between a ground terminal and a satellite is long, and a link budget is limited, when communicating with the satellite, the terminal device needs to perform the satellite alignment process to improve a signal gain, so as to ensure effective communication with the satellite.

The satellite alignment process of the terminal device may be understood as a process in which the terminal device adjusts an antenna attitude to align a radiation direction of an antenna with a target satellite, thereby enabling the terminal device to communicate with the satellite. Adjusting the antenna attitude may be understood as a process in which the terminal device adjusts an azimuth, an elevation, and a polarization angle of the antenna to align an antenna beam center of the terminal device with the satellite.

In the NTN communication scenario, the terminal device needs to first perform the satellite alignment process, so that the terminal device connects to an access network device and a core network device only after the terminal device may communicate with the satellite of an NTN (which is alternatively understood as that the terminal device is in a satellite alignment state), to obtain a service (which is alternatively understood as a network service) of the NTN. If the terminal device does not perform the satellite alignment process, that is, the terminal device does not communicate with the satellite of the NTN (which is alternatively understood as that the terminal device is not in the satellite alignment state), the terminal device does not obtain the service of the NTN.

### 3. Periodic registration

A terminal device can accept a communication service provided by a communication network, only after successfully registering with a core network device in the communication network. The communication network includes but is not limited to an NTN or a terrestrial network (terrestrial network, TN). After the registered terminal device enters an idle state, the core network device in the communication network may learn, depending on whether the terminal device performs periodic registration, whether the terminal device is reachable. It can be ensured, only when the terminal device is reachable, that the terminal device can normally communicate with the network subsequently.

Specifically, a periodic registration timer (periodic registration timer) is configured for the terminal device, and the terminal device initiates the periodic registration based on the periodic registration timer. It may be understood as that the periodic registration timer is started when the terminal device enters the idle state; when the periodic registration timer expires, the terminal device sends a periodic registration request to the core network device, so that the core network device learns that the terminal device is still reachable; and after sending the periodic registration request, the terminal device resets timing of the periodic registration timer after entering the idle state again, to send the periodic registration request again when the periodic registration timer expires again next time. If after the periodic registration timer expires, the terminal device does not send the periodic registration request to the core network device, which is alternatively understood as that the core network device does not receive the periodic registration request, it is considered that the terminal device does not perform periodic registration on time.

### 4. Deregistration

The deregistration is a process in which a network side (for example, a core network device) releases related information (for example, session information and context information) of a terminal device. After the terminal device is deregistered, the terminal device needs to obtain a service of a communication network again, and needs to perform registration (that is, perform an initial registration procedure) again.

It should be noted that implicit deregistration mentioned in this application may be understood as a case in which the core network device deregisters the terminal device without notifying the terminal device. For details about the implicit deregistration, refer to 3GPP TS 23.501.

FIG. 3c is a schematic flowchart of implicit deregistration according to an embodiment of this application. In FIG. 3c, the core network device is configured with a mobile reachable timer (mobile reachable timer) and an implicit deregistration timer (implicit deregistration timer), where a value of the mobile reachable timer is greater than a value of a periodic registration timer. After the terminal device enters an idle state, the core network device starts the mobile reachable timer. If the core network device still does not receive a registration request message sent by the terminal device after the mobile reachable timer expires, the network side considers that the terminal device is unreachable, and starts the implicit deregistration timer. If the terminal device still does not send the registration request message to the core network device after the implicit deregistration timer expires, the core network device implicitly deregisters the terminal device, deletes the related information of the terminal device, and the like.

After entering the CM idle state, the terminal device needs to periodically execute a registration update procedure (for example, periodically perform registration update on the timer) according to a requirement of the core network, to ensure that the core network considers that the terminal device is reachable. In this way, the terminal device can normally communicate with the network subsequently. In an NTN communication scenario, if the terminal device periodically performs the registration update procedure, the terminal device needs to periodically perform a satellite alignment process, thereby causing large power consumption overheads to the terminal device. In addition, when the terminal device performs the satellite alignment process in a manual satellite alignment manner, the terminal device cannot periodically and automatically perform the satellite alignment process (which is alternatively understood as that the terminal device does not ensure periodic initiation of registration update). Consequently, the core network considers that the terminal is unreachable, and deregisters the terminal device, affecting timeliness of a communication service of the terminal device.

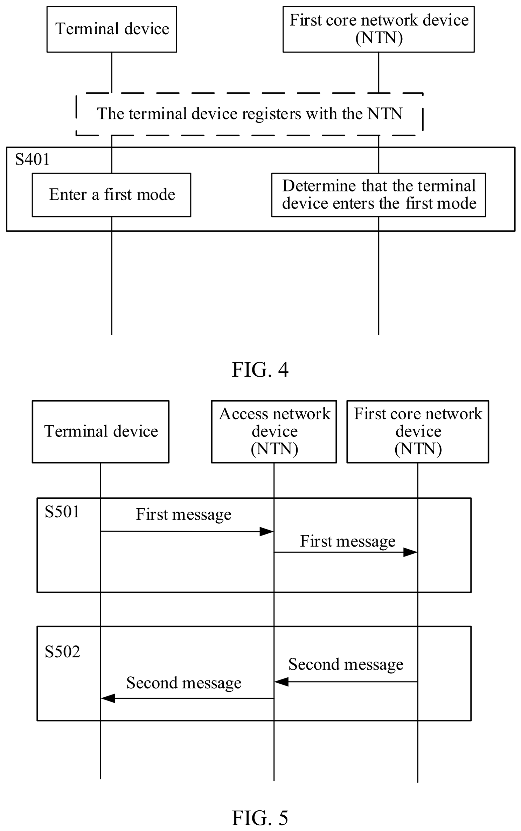

To reduce the power consumption overheads of the terminal device and improve the timeliness of the communication service of the terminal device, this application provides a method and a communication apparatus. The following describes in detail the method and the communication apparatus provided in embodiments of this application with reference to the accompanying drawings. FIG. 4 is a schematic flowchart of a method according to an embodiment of this application. As shown in FIG. 4, the method includes the following step S401. An example in which the method shown in FIG. 4 is performed by a terminal device and a first core network device in an NTN is used for description. It may be understood that the method shown in FIG. 4 may alternatively be performed by a module (for example, a chip) in the terminal device and a module (for example, a chip) in the first core network device.

S401: The terminal device enters a first mode when the terminal device completes registration with the NTN. Correspondingly, when the terminal device completes the registration with the NTN, the first core network device in the NTN determines that the terminal device enters the first mode.

For the terminal device, after entering the first mode, the terminal device does not need to initiate, in the first mode, periodic registration with the first core network device in the NTN, which is alternatively understood as that a periodicity (collectively referred to as a first periodicity below for ease of description) in which the terminal device initiates, in the first mode, the periodic registration with the first core network device is greater than a periodicity (collectively referred to as a second periodicity below for ease of description) in which the terminal device initiates periodic registration with a second core network device in a TN. In a possible implementation, the terminal device in the first mode further has one or more of the following features: (1) keeping in a registered state and/or keeping no service; and (2) no need to listen to a paging message from the NTN. Keeping no service may be understood as that the terminal device enters a no-service state.

For the first core network device in the NTN, the first core network device configures that the terminal device in the first mode does not need to send periodic registration to the first core network device in the NTN; or the first periodicity configured by the first core network device is greater than the second periodicity. In a possible implementation, after determining that the terminal device enters the first mode, the first core network device may further perform one or more of the following operations: (1) The terminal device in the first mode keeps in the registered state and/or for no service. It may be understood as that the first core network device does not trigger an implicit deregistration procedure for the terminal device, or the first core network device sets an implicit deregistration timer to an infinite value (which is alternatively understood as a large value, or understood as being deactivated). (2) There is no need to send the paging message to the terminal device, which is alternatively understood as that the terminal device does not need to be paged.

In a possible implementation, after entering the first mode, the terminal device sends a first message to the first core network device when the terminal device switches from a second state to a first state. The terminal device communicates with a satellite of the NTN in the second state, and the terminal device does not communicate with the satellite of the NTN in the first state. For example, the second state is a state in which the terminal device is not aligned with the satellite (or referred to as a non-satellite alignment state), and the first state is a state in which the terminal device is aligned with the satellite (or referred to as a satellite alignment state). The first message is used for requesting registration or requesting a service. For example, the first message is a registration request message or a service request message. In other words, after entering the first mode, if the terminal device has a requirement for the service of the NTN, the terminal device may switch from the second state to the first state. After the terminal device switches to the first state, the terminal device sends the first message to the first core network device via the satellite of the NTN, to request the registration or request the service.

It should be noted that an occasion at which the terminal device enters the first mode may be the same as or different from an occasion at which the first core network device determines that the terminal device enters the first mode. This is not specifically limited in this application. Correspondingly, an occasion at which the terminal device exits the first mode may be the same as or different from an occasion at which the first core network device determines that the terminal device exits the first mode. This is not specifically limited in this application.

The following separately describes the occasion at which the terminal device enters the first mode, the occasion at which the terminal device exits the first mode, the occasion at which the first core network device determines that the terminal device enters the first mode, and the occasion at which the first core network device determines that the terminal device exits the first mode.

### 1. Occasion at which the terminal device enters the first mode

In a case, the terminal device may enter the first mode after the terminal device completes the registration with the NTN. In other words, in this case, the terminal device may enter the first mode when the terminal device satisfies a condition for completing the registration with the NTN.

In another case, in addition to the condition for completing the registration with the NTN, the terminal device should enter the first mode only when a first condition is satisfied. The first condition includes at least one of the following conditions:
Condition 1: The terminal device completes data transmission via the NTN. It should be understood that Condition 1 includes either of the following two understandings: (1) The terminal device completes the data transmission via the NTN; and (2) the terminal device completes the data transmission via the NTN, and the terminal device does not perform data transmission via the NTN in fourth duration, where the fourth duration is greater than 0.
Condition 2: A connection management status of the terminal device is changed from a CM connected state to a CM idle state. It should be understood that Condition 2 includes either of the following two understandings: (1) The terminal device switches from the CM connected state to the CM idle state; and (2) the terminal device switches from the CM connected state to the CM idle state, and duration in which the terminal device is in the CM idle state is greater than second duration, where the second duration is greater than 0.
Condition 3: The terminal device switches from the first state to the second state, where the terminal device communicates with the satellite of the NTN in the first state, and the terminal device does not communicate with the satellite of the NTN in the second state. It should be understood that Condition 3 includes either of the following two understandings: (1) The terminal device switches from the first state to the second state; and (2) the terminal device switches from the first state to the second state, and duration in which the terminal device is in the second state is greater than fifth duration, where the fifth duration is greater than 0.
Condition 4: The terminal device stops using the NTN service. It should be understood that Condition 4 includes either of the following two understandings: (1) The terminal device switches from using the NTN service to stopping using the NTN service; and (2) the terminal device switches from using the NTN service to stopping using the NTN service, and the terminal device still does not use the NTN service in sixth duration, where the sixth duration is greater than 0.

### 2. Occasion at which the terminal device exits the first mode

After entering the first mode, the terminal device exits the first mode when a second condition is satisfied, where the second condition includes at least one of the following conditions:
Condition 5: The terminal device switches from the second state to the first state, where the terminal device communicates with the satellite of the NTN in the first state, and the terminal device does not communicate with the satellite of the NTN in the second state.
Condition 6: The terminal device needs to switch from the CM idle state to the CM connected state. For example, the terminal device has an uplink signaling or data transmission requirement.
Condition 7: The terminal device detects that a satellite alignment operation is performed. That is, the terminal device is performing an operation related to the satellite alignment process.

### 3. Occasion at which the first core network device determines that the terminal device enters the first mode

In a case, when the terminal device completes the registration with the NTN, the first core network device determines that the terminal device enters the first mode. In other words, in this case, if the condition for completing the registration with the NTN is satisfied, the first core network device determines that the terminal device enters the first mode.

In another case, in addition to the condition for completing the registration with the NTN, the first core network device should determine, only when the third condition is satisfied, that the terminal device enters the first mode. The third condition includes at least one of the following conditions:
Condition 8: The connection management status of the terminal device is changed from the CM connected state to the CM idle state. It should be understood that Condition 8 includes either of the following two understandings: (1) The first core network device detects that the connection management status of the terminal device switches from the CM connected state to the CM idle state; and (2) the first core network device detects that the terminal device switches from the CM connected state to the CM idle state, and the duration in which the terminal device is in the CM idle state is greater than the second duration, where the second duration is greater than 0.
Condition 9: The first core network device detects that the terminal device does not use the network service of the NTN in third duration, where the third duration is greater than 0.
Condition 10: Paging the terminal device by the first core network device fails. Condition 10 may be understood as follows: When the terminal device is in the CM idle state, the first core network device fails to send the paging message to the terminal device. For example, the first core network device does not receive a response from the terminal device after sending the paging message to the terminal device.

### 4. Occasion at which the first core network device determines that the terminal device exits the first mode

After the first core network device determines that the terminal device enters the first mode, when a fourth condition is satisfied, the first core network device determines that the terminal device exits the first mode. The fourth condition includes one or more of the following conditions:
Condition 11: The first core network device receives the first message from the terminal device, where the first message is used for requesting registration or requesting a service.
Condition 12: The first core network device detects that the connection management status of the terminal device switches from the CM idle state to the CM connected state.

In conclusion, in the method described in FIG. 4, after completing the registration with the NTN, the terminal device may enter a mode in which the periodic registration does not need to be initiated with the first core device in the NTN (that is, the first mode mentioned in this application), or the terminal device enters a mode in which a periodicity of initiating the periodic registration is long. Therefore, the satellite alignment process performed due to the periodic registration can be reduced, and power consumption of the terminal device can be reduced.

In the method described in FIG. 4, that the terminal device completes the registration with the NTN may be understood as that a registration process performed by the terminal device in the NTN mainly includes the following two steps: S1: The terminal device sends the first message to the first core network device in the NTN, where the first message is used for requesting registration; and S2: the terminal device receives a second message from the first core network device, where the second message indicates that the first core network device accepts a registration request of the terminal device. In addition, in the method described in FIG. 4, the first core network device may serve only the NTN (which may be understood as that when a core network device in the NTN is different from a core network device in the TN, the first core network device is the core network device in the NTN), or the first core network device may serve both the NTN and the TN (which may be understood as that when all core network devices shared by the NTN and the TN are the same or the NTN and the TN share some core network devices, the first core network device is a core network device shared by the NTN and the TN). With reference to the method described in FIG. 4, the following describes in detail the process of registering with the NTN by the terminal device in the following several cases.

Case 1: An operator corresponding to an NTN may be a dedicated operator of the NTN, and mainly operates the NTN. In this case, it may be understood as that a first core network device serves only the NTN. For a procedure of registering with the NTN by a terminal device, refer to FIG. 5.

S501: The terminal device sends a first message to the first core network device, where the first message is used for requesting registration.

After the terminal device performs a satellite alignment process, the terminal device sends, to an access network device in the NTN, the first message used for requesting registration (for example, a registration request message), and the access network device in the NTN forwards the first message to the first core network device. It should be noted that the access network device in the NTN may be deployed on a satellite, or may not be deployed on the satellite. This is not specifically limited in this application. For ease of understanding, after the terminal device performs the satellite alignment process in this application, it may be understood as that the terminal device communicates with the access network device in the NTN.

In a possible implementation, the first message includes at least one of the following: a preference for a first mode, first information, first capability information, or second capability information. The first information indicates that the terminal device does not ensure that periodic registration is performed, or the first information indicates that the terminal device requests not to perform periodic registration. The first capability information indicates whether the terminal device has a capability of supporting NTN communication. The second capability information indicates whether the terminal device has a capability of automatic satellite alignment. It may be understood that, when the first message includes the first information, the first message may further include other information (for example, the preference for the first mode and information for requesting registration) in addition to the first information.

When the first message includes the preference for the first mode, it indicates that the terminal device expects to subsequently enter the first mode when a condition is satisfied. In other words, when the terminal device expects to subsequently enter the first mode when the condition is satisfied, the first message may include the preference for the first mode. In a possible implementation, the first message includes the preference for the first mode only when the terminal device does not have the capability of the automatic satellite alignment (which is alternatively understood as that the terminal device has only the capability of the automatic satellite alignment), or when manual satellite alignment is selected by a user for the terminal device to perform a satellite alignment operation. The first message may not include the preference for the first mode when the terminal device has the capability of the automatic satellite alignment. For example, when detecting the NTN, the terminal device outputs prompt information through a user interface (user interface, UI), where the prompt information is used for prompting the user whether to enter the first mode, that an incoming call cannot be received in the first mode, and the like. After the user inputs confirmation information based on the prompt information, it may be understood as that manual satellite alignment is selected by the user for the terminal device to perform the satellite alignment operation. In this case, the first message sent by the terminal device to the first core network includes the preference for the first mode.

In Example 1, the first message includes the preference for the first mode. In this case, after receiving the first message, the first core network device may determine, based on subscription information of the terminal device about the NTN, whether to accept the preference of the terminal device for the first mode. For example, when the subscription information of the terminal device in the NTN includes subscription information indicating that the first mode can be entered, the first core network device determines to accept the preference of the terminal device for the first mode.

When the first message includes at least one of the first information, the first capability information, or the second capability information, the first core network device may determine, based on the first information, at least one of the following: (1) after the terminal device completes the registration with the NTN, whether the terminal device can enter the first mode (which may alternatively be understood as determining whether to accept the preference of the terminal device for the first mode); (2) whether a periodic registration timer is activated; and (3) duration of the periodic registration timer when the periodic registration timer is activated; (4) whether to perform implicit deregistration on the terminal device; or (5) when a periodic registration timer is not activated, a reachable timer and an implicit deregistration timer are not activated, so that an implicit deregistration procedure is not to be performed. In a possible implementation, when the second capability information indicates that the terminal device does not have the capability of the automatic satellite alignment, it may be understood as that the second capability information further indicates that the terminal device does not ensure that periodic registration is performed. When the first capability information indicates that the terminal device has an NTN communication capability, and the second capability information indicates that the terminal device does not have the capability of the automatic satellite alignment, the first capability information and the second capability information indicate that the terminal device does not ensure that periodic registration is performed. It may be understood as that, in this possible implementation, content indicated by the first information is indicated by using the first capability information and/or the second capability information. That is, it may be understood as that the first information includes the first capability information and/or the second capability information.

In Example 2, the first message includes the first capability information, and the first capability information indicates that the terminal device has the capability of supporting the NTN communication. In this case, the first core network device may determine, based on the first capability information, that the terminal device may enter the first mode after the terminal device completes the registration with the NTN. In a possibility of Example 2, the first core network device may further determine, based on the subscription information of the terminal device about the NTN (for example, duration in which the terminal device subscribes to an NTN service), to activate the periodic registration timer corresponding to the terminal device, and determine the duration of the periodic registration timer as the first duration; may further determine to activate the reachable timer and the implicit deregistration timer, where duration of the reachable timer is greater than the first duration, and duration of the implicit deregistration timer is greater than the first duration; and may not perform implicit deregistration on the terminal device before the implicit deregistration timer expires.

In Example 3, the first message includes the second capability information, and the second capability information indicates that the terminal device does not have the capability of the automatic satellite alignment, or indicates that the terminal device can perform the satellite alignment process only through a manual operation (that is, indicates that the terminal device has only a capability of manual satellite alignment). In this case, the first core network device may determine, based on the second capability information, that the terminal device may enter the first mode after the terminal device completes the registration with the NTN. In a possibility of Example 3, the first core network device may further determine, based on the subscription information of the terminal device about the NTN (for example, the duration in which the terminal device subscribes to the NTN service), to activate the periodic registration timer corresponding to the terminal device, and determine the duration of the periodic registration timer as the first duration; may further determine to activate the reachable timer and the implicit deregistration timer, where the duration of the reachable timer is greater than the first duration, and the duration of the implicit deregistration timer is greater than the first duration; and may not perform implicit deregistration on the terminal device before the implicit deregistration timer expires.

It should be stated that a manner in which the first capability information described in this application indicates whether the terminal device has the capability of supporting the NTN communication includes an explicit indication manner and an implicit indication manner. A manner in which the second capability information indicates whether the terminal device has the capability of the automatic satellite alignment also includes an explicit indication manner and an implicit indication manner. For ease of understanding, the explicit indication manner and the implicit indication manner corresponding to the first capability information are used as an example for description.

For example, the first capability information corresponds to a field 1. In the explicit indication manner, when a value of the field 1 is 0, the first capability information indicates that the terminal device has the capability of supporting the NTN communication; or when the value of the field 1 is 1, the first capability information indicates that the terminal device does not have the capability of supporting the NTN communication. In the implicit indication manner, when the first message includes the field 1, the first capability information indicates that the terminal device has the capability of supporting the NTN communication; or when the first message does not include the field 1, the first capability information indicates that the terminal device does not have the capability of supporting the NTN communication. Alternatively, in another implicit indication manner, when the first message includes the field 1, the first capability information indicates that the terminal device does not have the capability of supporting the NTN communication; or when the first message does not include the field 1, the first capability information indicates that the terminal device has the capability of supporting the NTN communication.

S502: The terminal device receives a second message from the first core network device, where the second message indicates that the first core network device accepts a registration request of the terminal device.

After the first core network device receives the first message via the access network device in the NTN, the first core network device determines, based on the subscription information of the terminal device about the NTN, to accept the registration request of the terminal device. Further, the first core network device sends the second message (for example, a registration accept message) to the access network device in the NTN, and the access network device in the NTN forwards the second message to the terminal device.

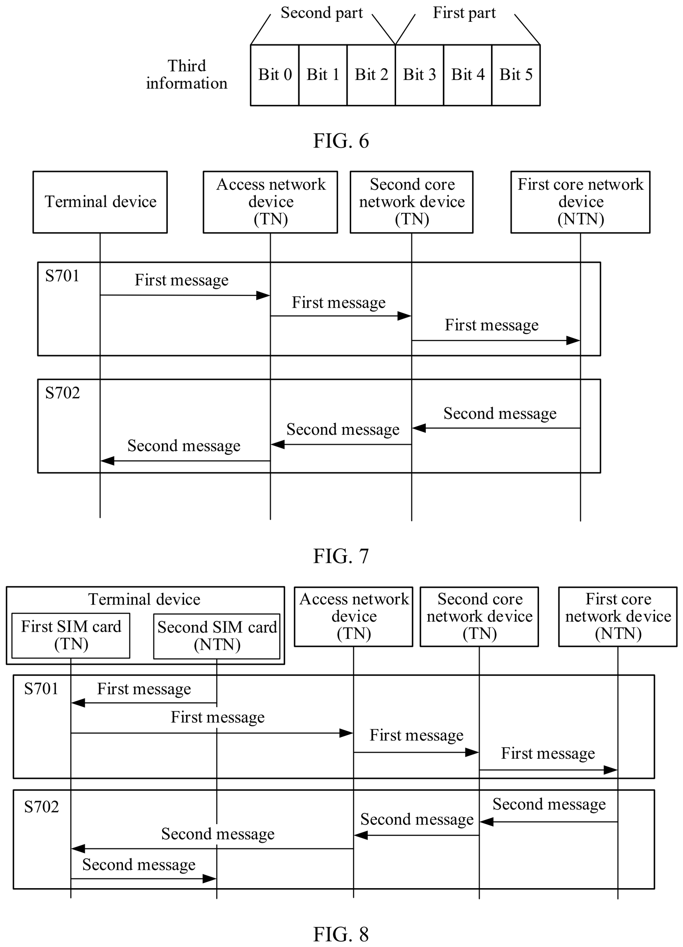

In a possible implementation, the second message includes at least one of the following information: information for confirming acceptance of the preference of the terminal device for the first mode, second information, or third information. After the second information indicates that the terminal device enters the first mode, the terminal device does not need to initiate the periodic registration with the first core network device in the NTN; and the third information indicates the first duration (that is, the duration of the periodic registration timer, where the first duration is related to the duration in which the terminal device subscribes to the NTN service), and/or the third information indicates whether the periodic registration timer is to be activated. In a possible implementation of the third information, the third information includes two parts, where a first part indicates duration of the periodic registration timer, and a second part indicates a multiple (that is, a unit corresponding to the length of the periodic registration timer, for example, 10s, 10 mins, or 1 h). When a value of the second part is a first value, the third information indicates that the periodic registration timer is not to be activated; or when the value of the second part is another value (that is, a non-first value), the third information indicates that the periodic registration timer is to be activated, and the value (that is, the another value) of the second part indicates the multiple. For example, the third information is shown in FIG. 6. When the second part indicates 111 (that is, the first value), the third information indicates that the periodic registration timer is not to be activated. When the second part indicates 100, the second part indicates that the periodic registration timer is to be activated, and the multiple is 1 h; and if the first part indicates that the length of the periodic registration timer is 60, the third information indicates that the first duration is 60 h.

It may be understood that, when the second message includes the information for confirming the acceptance of the preference of the terminal device for the first mode, or includes the second information, the terminal device may subsequently enter the first mode when a condition for entering the first mode (for example, the foregoing first condition) is satisfied. When the second message includes the third information, after entering the first mode, the terminal device does not need to initiate the periodic registration with the first core network device in the first duration indicated by the third information.

For example, following Example 1 in S501, the second message includes the information for confirming the acceptance of the preference of the terminal device for the first mode.

For example, following Example 2 in S501, the second message includes the second information. In a possible implementation, the second message further includes the third information indicating that the periodic registration timer is to be activated and the first duration.

For example, following Example 3 in S501, the second message includes the second information. In a possible implementation, the second message further includes the third information indicating that the periodic registration timer is to be activated and the first duration.

Case 2: An operator corresponding to an NTN is different from an operator corresponding to a TN, and the operator corresponding to the NTN has a cooperative relationship with the operator corresponding to the TN. That is, it may be understood as that a first core network device and a second core network device have a communication connection and can communicate with each other. In this case, it may be understood as that the first core network device serves only the NTN. For a procedure of registering with the NTN by a terminal device, refer to FIG. 7.

S701: The terminal device sends a first message to the first core network device via the second core network device, where the first message is used for requesting registration.

In other words, the terminal device sends the first message to the second core network device via an access network device in the TN. Further, the second core network device forwards the first message to the first core network device. For specific descriptions of the first message, refer to the specific descriptions of the first message in S501. Details are not described herein again.

In a possible implementation, the terminal device includes a first subscriber identity module (subscriber identity module, SIM) card and a second SIM card. The first SIM card subscribes to a TN service, and the second SIM card subscribes to an NTN service. In this case, an implementation procedure of S701 is shown in FIG. 8, and includes: The terminal device sends the first message to the first SIM card by using the second SIM card; the first SIM card sends the first message to the access network device in the TN; the access network device in the TN sends the first message to the second core network device; and the second core network device forwards the first message to the first core network device.

In a possible implementation, at least one of the first SIM card or the second SIM card is an embedded-SIM (Embedded-SIM, eSIM) card.

S702: The terminal device receives a second message from the first core network device via the second core network device, where the second message indicates that a registration request of the terminal device is accepted.

In other words, after receiving the first message, the first core network device determines, based on subscription information of the terminal device about the NTN, to accept the registration request of the terminal device. Further, the first core network device sends the second message to the second core network device, the second core network device sends the second message to the access network device in the TN, and the access network device in the TN sends the second message to the terminal device. For specific descriptions of the second message, refer to the specific descriptions of the second message in S502. Details are not described herein again.

In a possible implementation, the terminal device includes a first SIM card and a second SIM card. The first SIM card subscribes to a TN service, and the second SIM card subscribes to an NTN service. In this case, an implementation procedure of S702 is shown in FIG. 8, and includes: The first core network device sends the second message to the second core network device; the second core network device sends the second message to the access network device in the TN; the access network device in the TN sends the second message to the first SIM card; and the first SIM card sends the second message to the second SIM card. After the second SIM card receives the second message, it is considered that the terminal device in S702 receives the second message.

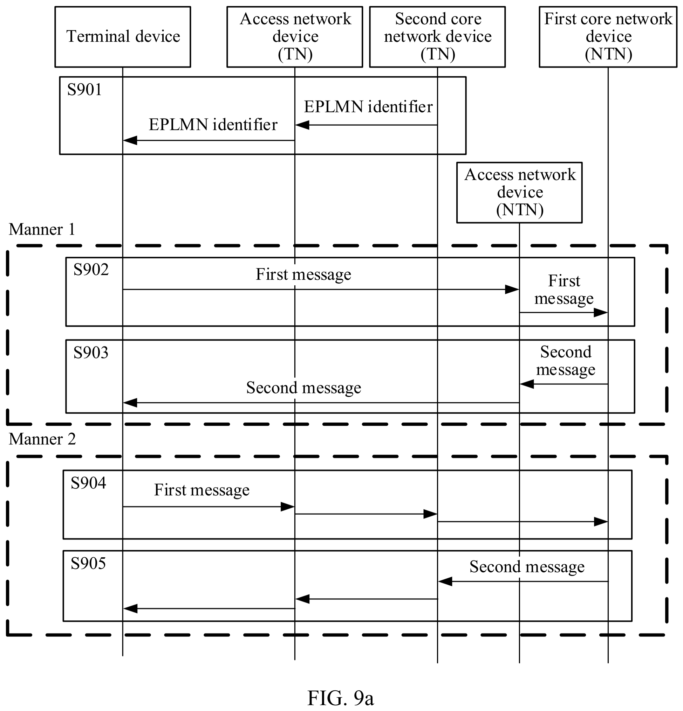

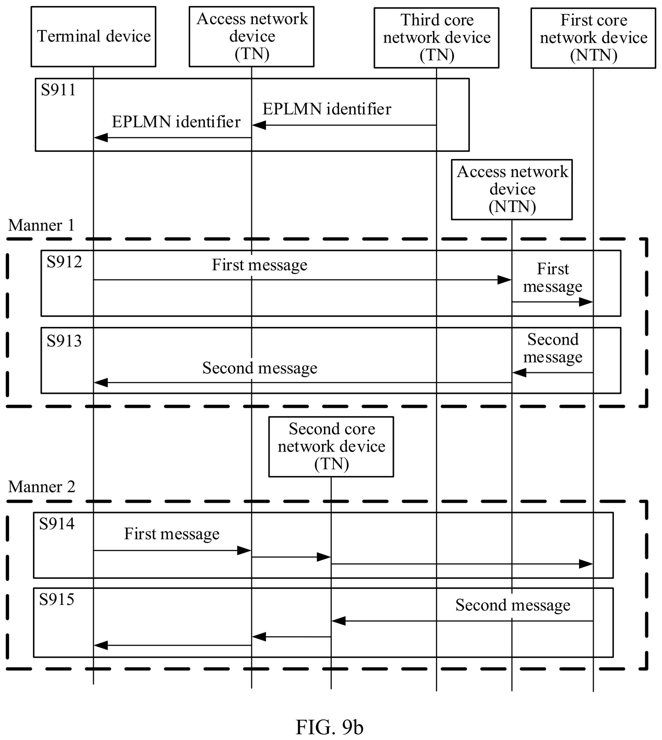

Case 3: A public land mobile network (public land mobile network, PLMN) corresponding to an NTN and a PLMN corresponding to a TN are different PLMNs. For example, a same operator operates both the TN and the NTN, and the TN and the NTN correspond to different PLMNs respectively. Alternatively, an operator to which the NTN belongs is different from an operator to which the TN belongs, but there is a roaming agreement between the operator to which the NTN belongs and the operator to which the TN belongs. For example, a user of the operator to which the TN belongs may roam to the NTN that has the roaming agreement, and a user of the operator to which the NTN belongs may also roam to the TN that has the roaming agreement. In this case, it may be understood as that a first core network device serves only the NTN. For a procedure of registering with the NTN by a terminal device, refer to FIG. 9a or FIG. 9b.

In the schematic flowchart shown in FIG. 9a:
S901: A second core network device sends at least one equivalent public land mobile network (equivalent public land mobile network, EPLMN) identifier to the terminal device.

In FIG. 9a, the second core network device is a core network device for the terminal device to register with the PLMN. In other words, in a process of registering with the TN, the terminal device may receive the at least one EPLMN identifier sent by the second core network device in the TN. The at least one EPLMN identifier includes a PLMN identifier of the NTN.

Specifically, the terminal device sends a registration request message to the second core network device, where the registration request message is used for registering with the TN (which may be understood as registering with the PLMN of the TN). The second core network device sends a registration accept message to the terminal device based on subscription information of the terminal device, where the registration accept message indicates that a registration request of the terminal device is received, the registration accept message includes the at least one EPLMN identifier, and the EPLMN identifier includes the PLMN identifier of the NTN (for example, when the subscription information of the terminal device includes NTN subscription, the PLMN identifier includes the PLMN identifier of the NTN). Subsequently, when the terminal device needs to obtain an NTN service, for example, when moving to an area not covered by the registered network, the terminal device performs a satellite alignment operation, and registers with the NTN based on the PLMN identifier of the NTN. A procedure of registering with the NTN based on the PLMN identifier of the NTN may include either the following Manner 1 or Manner 2.

S902 (optional Manner 1): The terminal device sends a first message to the first core network device, where the first message is used for requesting registration.

In other words, after completing the registration with the TN, if the terminal device needs to obtain the NTN service, for example, moves to an area not covered by the TN, the terminal device may send, to the first core network device via an access network device in the NTN, the first message used for requesting to register with the NTN. For specific descriptions of the first message, refer to the specific descriptions of the first message in S501. Details are not described herein again.

S903 (optional Manner 1): The terminal device receives a second message from the first core network device, where the second message indicates that the first core network device accepts a registration request of the terminal device.

In other words, after receiving the first message, the first core network device determines, based on the subscription information of the terminal device about the NTN, to accept the registration request of the terminal device. Further, the first core network device sends the second message to the terminal device via the access network device in the NTN. For specific descriptions of the second message, refer to the specific descriptions of the first message in S501. Details are not described herein again.

S904 (optional Manner 2): The terminal device sends a first message to the first core network device via the second core network device, where the first message is used for requesting registration.

In other words, after completing the registration with the TN, the terminal device may alternatively send the first message to the second core network device via an access network device in the TN. Further, the second core network device forwards the first message to the first core network device. For specific descriptions of the first message, refer to the specific descriptions of the first message in S501. Details are not described herein again.

S905 (optional Manner 2): The terminal device receives a second message from the first core network device via the second core network device, where the second message indicates that a registration request of the terminal device is accepted.

In other words, after receiving the first message, the first core network device determines, based on the subscription information of the terminal device about the NTN, to accept the registration request of the terminal device. Further, the first core network device sends the second message to the second core network device, the second core network device sends the second message to the access network device in the TN, and the access network device in the TN sends the second message to the terminal device. For specific descriptions of the second message, refer to the specific descriptions of the second message in S502. Details are not described herein again.

In the schematic flowchart shown in FIG. 9b:
S911: A third core network device sends at least one EPLMN identifier to the terminal device.

In FIG. 9b, the third core network device is a core network device used when the terminal device registers with the PLMN of the TN. In other words, in a process of registering with the TN, the terminal device may receive the at least one EPLMN identifier sent by the third core network device in the TN. The at least one EPLMN identifier includes a PLMN identifier of the NTN.

Specifically, the terminal device sends a registration request message to the third core network device, where the registration request message is used for registering with the TN. The third core network device sends a registration accept message to the terminal device based on the subscription information of the terminal device, where the registration accept message indicates that a registration request of the terminal device is received, the registration accept message includes the at least one EPLMN identifier, and the EPLMN identifier includes the PLMN identifier of the NTN. Subsequently, when the terminal device needs to obtain an NTN service, for example, after leaving a coverage area of the TN, the terminal device performs a satellite alignment operation, and registers with the NTN based on the PLMN identifier of the NTN. A procedure of registering with the NTN based on the PLMN identifier of the NTN may include either the following Manner 1 or Manner 2.

S912 (optional Manner 1): The terminal device sends a first message to the first core network device, where the first message is used for requesting registration.

S913 (optional Manner 1): The terminal device receives a second message from the first core network device, where the second message indicates that the first core network device accepts a registration request of the terminal device.

S914 (optional Manner 2): The terminal device sends a first message to the first core network device via the second core network device, where the first message is used for requesting registration.

S915 (optional Manner 2): The terminal device receives a second message from the first core network device via the second core network device, where the second message indicates that a registration request of the terminal device is accepted.

For specific implementations of S912 to S915, refer to the specific implementations of S902 to S905 in FIG. 9a. Details are not described herein again. It should be noted that a difference between FIG. 9a and FIG. 9b lies in that: In FIG. 9a, the second core network device (that is, the core network device in the TN in S904 and S905 in FIG. 9a) in Manner 2 is the same as the core network device (that is, the core network device in the TN in S901 in FIG. 9a) used when the terminal device registers with the PLMN of the TN, but in FIG. 9b, the second core network device (that is, the core network device in the TN in S914 and S915 in FIG. 9b) in Manner 2 is different from the core network device (that is, the core network device in the TN in S911 in FIG. 9b) used when the terminal device registers with the PLMN of the TN.

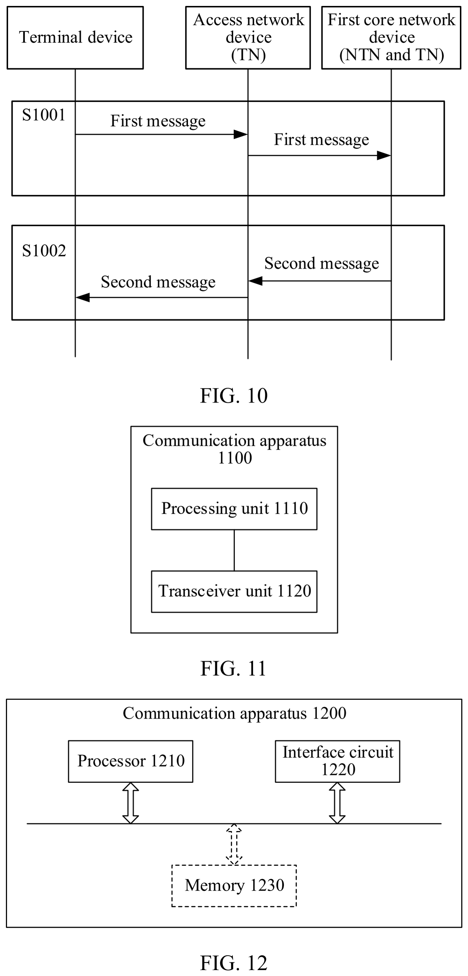

Case 4: An NTN and a TN correspond to different access technologies in a same PLMN. For example, the NTN and the TN belong to a same operator. In this case, it may be understood as that a first core network device may serve both the NTN and the TN, and a terminal device may be connected to the first core network device in an NTN access manner or a TN access manner. For a procedure of registering with the NTN by the terminal device, refer to FIG. 10.

S1001: The terminal device sends a first message to the first core network device, where the first message is used for requesting registration. For descriptions of the first message, refer to the descriptions of the first message in S501. Details are not described herein again.

Because the first core network device serves the NTN and the TN, the terminal device may send the first message to the first core network device via an access network device (which may be an access network device in the NTN or an access network device in the TN). The first message may be used for requesting to register with the NTN, or requesting to register with the TN and the NTN.

S1002: The terminal device receives a second message from the first core network device, where the second message indicates that the first core network device accepts a registration request of the terminal device. For descriptions of the second message, refer to the descriptions of the second message in S502. Details are not described herein again.

Further, the terminal device may receive the second message from the first core network device via the access network device (which may be the access network device in the NTN or the access network device in the TN).

In a possible implementation of Case 4, a periodicity in which the terminal device initiates, in a first mode, periodic registration with the first core network device (that is, the first periodicity mentioned in this application) is greater than a periodicity in which the terminal device initiates periodic registration with the first core network device after exiting the first mode (in other words, a periodicity in which the terminal device initiates periodic registration in the TN, that is, the second periodicity mentioned in this application). It may be understood as that duration (for example, the foregoing first duration) that is of a periodic timer and that is configured by the first core network device for the terminal device in the first mode is greater than duration that is of the periodic timer and that is configured by the first core network device for the terminal device that exits the first mode; duration of a reachable timer, in the first core network device, corresponding to the terminal device in the first mode is greater than duration of the reachable timer, in the first core network device, corresponding to the terminal device that exits the first mode; or duration of an implicit deregistration timer, in the first core network device, corresponding to the terminal device in the first mode is greater than duration of the implicit deregistration timer, in the first core network device, corresponding to the terminal device that exits the first mode.

It may be understood that, to implement the functions in the foregoing embodiments, the terminal device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by a transceiver unit of computer software depends on particular application scenarios and design constraints of the technical solutions.

FIG. 11 and FIG. 12 are diagrams of structures of possible communication apparatuses according to embodiments of this application. These communication apparatuses may be configured to implement functions of the terminal device in the foregoing method embodiments. Therefore, beneficial effects of the foregoing method embodiments can also be implemented. In embodiments of this application, the communication apparatus may be a terminal device, or may be a module (for example, a chip) used in the terminal device, or the communication apparatus may be a first core network device, or may be a module (for example, a chip) used in the first core network device.

As shown in FIG. 11, the communication apparatus 1100 includes a processing unit 1110 and a transceiver unit 1120. The communication apparatus 1100 is configured to implement a function of the terminal device in the method embodiment shown in any one of FIG. 4 and FIG. 7 to FIG. 10, or is configured to implement a function of the first core network device in the method embodiment shown in any one of FIG. 4 and FIG. 7 to FIG. 10.

When the communication apparatus 1100 is configured to implement the function of the terminal device in embodiments of this application, when the terminal device completes registration with a non-terrestrial network NTN, the processing unit 1110 is configured to control the terminal device to enter a first mode, where the terminal device does not need to initiate, in the first mode, periodic registration with the first core network device in the NTN.

In a possible implementation, the transceiver unit 1120 is configured to send a first message to the first core network device, where the first message is used for requesting registration; and the transceiver unit 1120 is further configured to receive a second message from the first core network device, where the second message indicates that the first core network device accepts a registration request of the terminal device.

In a possible implementation, the first message includes first information, where the first information indicates that the terminal device does not ensure that periodic registration is performed, or the first information indicates that the terminal device requests not to perform periodic registration.

In a possible implementation, the first information includes first capability information and/or second capability information, the first capability information indicates whether the terminal device has a capability of supporting NTN communication, and the second capability information indicates whether the terminal device has a capability of automatic satellite alignment.

In a possible implementation, the second message includes second information, and the second information indicates that after entering the first mode, the terminal device does not need to initiate the periodic registration with the first core network device in the NTN.

In a possible implementation, the second message further includes third information, the third information indicates first duration, the first duration is duration of a periodic registration timer, and the first duration is related to duration in which the terminal device subscribes to an NTN service. That the terminal device does not need to initiate, in the first mode, the periodic registration with the first core network device in the NTN includes: The terminal device does not need to initiate, in the first mode, the periodic registration with the first core network device in the NTN in the first duration.

In a possible implementation, the third information indicates that a periodic registration timer is not to be activated.

In a possible implementation, the processing unit 1110 is configured to control the terminal device in the first mode to keep in a registered state and/or keep no service.

In a possible implementation, the terminal device does not need to listen, in the first mode, to a paging message from the NTN.

In a possible implementation, the processing unit 1110 is configured to control the terminal device to enter the first mode when the terminal device completes the registration and a first condition is satisfied, where the first condition includes at least one of the following:

The terminal device completes data transmission via the NTN;
the terminal device switches from a connection management CM connected state to a CM idle state;
the terminal device switches from a first state to a second state, where the terminal device communicates with a satellite of the NTN in the first state, and the terminal device does not communicate with the satellite of the NTN in the second state; or
the terminal device stops using the NTN service.

In a possible implementation, that the terminal device switches from the connection management CM connected state to the CM idle state includes: The terminal device switches from the CM connected state to the CM idle state, and duration in which the terminal device is in the CM idle state is greater than second duration, where the second duration is greater than 0.

In a possible implementation, after entering the first mode, the transceiver unit 1120 is configured to send the first message to the first core network device when the terminal device switches from the second state to the first state, where the first message is used for requesting registration or requesting a service, the terminal device communicates with the satellite of the NTN in the first state, and the terminal device does not communicate with the satellite of the NTN in the second state.

In a possible implementation, the processing unit 1110 is configured to control the terminal device to exit the first mode when a second condition is satisfied, where the second condition includes at least one of the following: The terminal device switches from the second state to the first state, where the terminal device communicates with the satellite of the NTN in the first state, and the terminal device does not communicate with the satellite of the NTN in the second state; the terminal device switches from the CM idle state to the CM connected state; or the terminal device detects that a satellite alignment operation is performed.

In a possible implementation, the first core network device serves only the NTN, or the first core network device serves the NTN and the TN.

In a possible implementation, the first core network device serves only the NTN; the transceiver unit 1120 is configured to send the first message to the first core network device via the second core network device in the TN; and the transceiver unit 1120 is configured to receive the second message from the first core network device via the second core network device.

In a possible implementation, the first message further includes a preference for the first mode, and the second message further includes information for confirming acceptance of the preference.

In a possible implementation, when the terminal device does not have the capability of the automatic satellite alignment, or manual satellite alignment is selected for the terminal device to perform the satellite alignment operation, the first message further includes the preference for the first mode.

In a possible implementation, the transceiver unit 1120 is configured to receive at least one equivalent public land mobile network EPLMN identifier from the second core network device, where the at least one EPLMN identifier includes a public land mobile network PLMN identifier of the NTN.

In a possible implementation, the transceiver unit 1120 is configured to receive at least one equivalent public land mobile network EPLMN identifier from a third core network device, where the at least one EPLMN identifier includes the public land mobile network PLMN identifier of the NTN, and the third core network device is a core network device for the terminal device to register with a PLMN.

In a possible implementation, the terminal device includes a first SIM card and a second SIM card, the first SIM card subscribes to a TN service, and the second SIM card subscribes to the NTN service. The second SIM card sends the first message to the first SIM card; the first SIM card sends the first message to an access network device in the TN; the first SIM card receives the second message from the access network device; and the first SIM card sends the second message to the second SIM card.

For more detailed descriptions of the transceiver unit 1120 and the processing unit 1110, refer to the related descriptions of the terminal device in embodiments of this application.

When the communication apparatus 1100 is configured to implement the function of the first core network device in embodiments of this application, when a terminal device completes registration with a non-terrestrial network NTN, the processing unit 1110 is configured to determine that the terminal device enters a first mode, where the terminal device does not need to initiate, in the first mode, periodic registration with the first core network device in the NTN.

In a possible implementation, the transceiver unit 1120 is configured to receive a first message from the terminal device, where the first message is used for requesting registration; and the transceiver unit 1120 is further configured to send a second message to the terminal device, where the second message indicates that the first core network device accepts a registration request of the terminal device.

In a possible implementation, the first message includes first information, where the first information indicates that the terminal device does not ensure that periodic registration is performed, or the first information indicates that the terminal device requests not to perform periodic registration.

In a possible implementation, the first information includes first capability information and/or second capability information, the first capability information indicates whether the terminal device has a capability of supporting NTN communication, and the second capability information indicates whether the terminal device has a capability of automatic satellite alignment.

In a possible implementation, the processing unit 1110 is further configured to determine the second message based on the first information, where the second message indicates at least one of the following:
information indicating whether to accept a preference;
whether a periodic registration timer is activated; and
duration of the periodic registration timer when the periodic registration timer is activated; or
whether to perform implicit deregistration on the terminal device.

In a possible implementation, the second message includes second information, and the second information indicates that after entering the first mode, the terminal device does not need to initiate the periodic registration with the first core network device in the NTN.

In a possible implementation, the second message further includes third information, the third information indicates first duration, the first duration is duration of the periodic registration timer, and the first duration is related to duration in which the terminal device subscribes to an NTN service; and that the terminal device does not need to initiate, in the first mode, the periodic registration with the first core network device in the NTN includes: The terminal device does not need to initiate, in the first mode, the periodic registration with the first core network device in the NTN in the first duration.

In a possible implementation, the third information indicates that the periodic registration timer is not to be activated.

In a possible implementation, the first core network device keeps the terminal device in the first mode in a registered state and/or for no service.

In a possible implementation, the first core network device does not need to send a paging message to the terminal device in the first mode.

In a possible implementation, when the terminal device completes the registration with the non-terrestrial network NTN, the processing unit 1110 is further configured to determine that the terminal device enters the first mode when the terminal device completes the registration with the non-terrestrial network NTN and a third condition is satisfied, where the third condition includes one or more of the following:

The terminal device switches from a connection management CM connected state to a CM idle state;
the terminal device does not use a network service of the NTN in third duration, where the third duration is greater than 0; or
paging the terminal device by the first core network device fails.

In a possible implementation, that the terminal device switches from the connection management CM connected state to the CM idle state includes: The terminal device switches from the CM connected state to the CM idle state, and duration in which the terminal device is in the CM idle state is greater than second duration, where the second duration is greater than 0.

In a possible implementation, after determining that the terminal device enters the first mode, the transceiver unit 1120 is configured to receive the first message from the terminal device, where the first message is used for requesting registration or requesting a service.

In a possible implementation, when a fourth condition is satisfied, the processing unit 1110 is further configured to determine that the terminal device exits the first mode, where the fourth condition includes at least one of the following: The first core network device receives the first message from the terminal device, where the first message is used for requesting registration or requesting a service; or the terminal device switches from the CM idle state to the CM connected state.

In a possible implementation, the first core network device serves only the NTN, or the first core network device serves the NTN and a TN.

In a possible implementation, the first core network device serves only the NTN; the transceiver unit 1120 is further configured to receive the first message from the terminal device via a second core network device in the TN; and the transceiver unit 1120 is further configured to send the second message to the terminal device via the second core network device.

In a possible implementation, the first message further includes the preference for the first mode, and the second message further includes information for confirming acceptance of the preference.

For more detailed descriptions of the transceiver unit 1120 and the processing unit 1110, refer to the related descriptions of the first core network device in embodiments of this application.

As shown in FIG. 12, a communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to: store instructions executed by the processor 1210, store input data required by the processor 1210 to run the instructions, or store data generated after the processor 1210 runs the instructions.

When the communication apparatus 1200 is configured to implement the method shown in the diagram in embodiments of this application, the processor 1210 is configured to implement the functions of the processing unit 1110, and the interface circuit 1220 is configured to implement the functions of the transceiver unit 1120.

When the communication apparatus is a chip used in a terminal device, the terminal chip implements a function of the terminal device in the foregoing method embodiments. That the terminal chip receives information from a base station may be understood as that the information is first received by other modules (for example, a radio frequency module or an antenna) in the terminal device, and then sent by these modules to the terminal chip. That the terminal chip sends information to the base station may be understood as that the information is first sent to other modules (for example, a radio frequency module or an antenna) in the terminal device, and then sent to the base station by these modules.

When the communication apparatus is a chip used in a first core network device, the chip in the first core network device implements a function of the first core network device in the foregoing method embodiments. That the chip in the first core network device receives information from a terminal device may be understood as that the information is first received by other modules (for example, a radio frequency module or an antenna) in the first core network device, and then sent by these modules to the chip in the first core network device. That the chip in the first core network device sends information to the terminal may be understood as that the information is delivered to other modules (for example, a radio frequency module or an antenna) in the network device, and then sent to the terminal by these modules.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entities A and B herein each may be a RAN node or a terminal, or may be a module in the RAN node or the terminal. Information receiving and sending may be information exchange between the RAN node and the terminal, for example, information exchange between a base station and a terminal. Information receiving and sending may alternatively be information exchange between two RAN nodes, for example, information exchange between a CU and a DU. Information receiving and sending may alternatively be information exchange between different modules in an apparatus, for example, information exchange between a terminal chip and another module in a terminal, or information exchange between a chip in a base station and another module in the base station.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may exist in the base station or the terminal as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof. The combined technical solutions also fall within the scope of this application.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, or C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A method, wherein the method comprises:
entering, by a terminal device, a first mode when the terminal device completes registration with a non-terrestrial network NTN, wherein
the terminal device does not need to initiate, in the first mode, periodic registration with a first core network device in the NTN; and
that the terminal device completes the registration with the non-terrestrial network NTN comprises:
sending, by the terminal device, a first message to the first core network device, wherein the first message is used for requesting registration; and
receiving, by the terminal device, a second message from the first core network device, wherein the second message indicates that the first core network device accepts a registration request of the terminal device.

2. The method according to claim 1, wherein the first message comprises first information, wherein
the first information indicates that the terminal device does not ensure that periodic registration is performed; or
the first information indicates that the terminal device requests not to perform periodic registration.

3. The method according to claim 2, wherein the first information comprises first capability information and/or second capability information, the first capability information indicates whether the terminal device has a capability of supporting NTN communication, and the second capability information indicates whether the terminal device has a capability of automatic satellite alignment.

4. The method according to any one of claims 1 to 3, wherein
the second message comprises second information, and the second information indicates that after entering the first mode, the terminal device does not need to initiate the periodic registration with the first core network device in the NTN;
or
the second message comprises third information, the third information indicates first duration, the first duration is duration of a periodic registration timer, and the first duration is related to duration in which the terminal device subscribes to an NTN service; and that the terminal device does not need to initiate, in the first mode, the periodic registration with the first core network device in the NTN comprises: the terminal device does not need to initiate, in the first mode, the periodic registration with the first core network device in the NTN in the first duration;
or
the second message comprises third information, and the third information indicates that a periodic registration timer is not to be activated.

5. The method according to any one of claims 1 to 4, wherein
the terminal device in the first mode keeps in a registered state and/or keeps no service; and/or
the terminal device does not need to listen, in the first mode, to a paging message from the NTN.

6. The method according to any one of claims 1 to 5, wherein
the entering, by the terminal device, the first mode when the terminal device completes the registration with the non-terrestrial network NTN comprises: entering, by the terminal device, the first mode when the terminal device completes the registration and a first condition is satisfied, wherein
the first condition comprises at least one of the following:
the terminal device completes data transmission via the NTN;
the terminal device switches from a connection management CM connected state to a CM idle state;
the terminal device switches from a first state to a second state, wherein the terminal device communicates with a satellite of the NTN in the first state, and the terminal device does not communicate with the satellite of the NTN in the second state; or
the terminal device stops using the NTN service.

7. The method according to claim 6, wherein that the terminal device switches from the connection management CM connected state to the CM idle state comprises: the terminal device switches from the CM connected state to the CM idle state, and duration in which the terminal device is in the CM idle state is greater than second duration, wherein the second duration is greater than 0.

8. The method according to any one of claims 1 to 7, wherein after the entering, by the terminal device, the first mode, the method comprises:
sending, by the terminal device, the first message to the first core network device when the terminal device switches from the second state to the first state, wherein
the first message is used for requesting registration or requesting a service, the terminal device communicates with the satellite of the NTN in the first state, and the terminal device does not communicate with the satellite of the NTN in the second state.

9. The method according to any one of claims 1 to 8, wherein the method further comprises:
exiting, by the terminal device, the first mode when a second condition is satisfied, wherein the second condition comprises at least one of the following:
the terminal device switches from the second state to the first state, wherein the terminal device communicates with the satellite of the NTN in the first state, and the terminal device does not communicate with the satellite of the NTN in the second state;
the terminal device switches from the CM idle state to the CM connected state; or
the terminal device detects that a satellite alignment operation is performed.

10. The method according to any one of claims 1 to 9, wherein the first core network device serves only the NTN, or the first core network device serves the NTN and a terrestrial network TN.

11. The method according to any one of claims 1 to 10, wherein the first message further comprises a preference for the first mode, and the second message further comprises information for confirming acceptance of the preference.

12. The method according to any one of claims 1 to 11, wherein
when the terminal device does not have the capability of the automatic satellite alignment, or manual satellite alignment is selected for the terminal device to perform the satellite alignment operation, the first message further comprises the preference for the first mode.

13. The method according to any one of claims 1 to 12, wherein the method further comprises:
receiving, by the terminal device, at least one equivalent public land mobile network EPLMN identifier from a second core network device, wherein the at least one EPLMN identifier comprises a public land mobile network PLMN identifier of the NTN.

14. The method according to any one of claims 1 to 13, wherein the method further comprises:
receiving, by the terminal device, at least one equivalent public land mobile network EPLMN identifier from a third core network device, wherein the at least one EPLMN identifier comprises the public land mobile network PLMN identifier of the NTN, and the third core network device is a core network device for the terminal device to register with a PLMN.

15. The method according to any one of claims 1 to 14, wherein the first core network device serves only the NTN;
the sending, by the terminal device, the first message to the first core network device comprises: sending, by the terminal device, the first message to the first core network device via the second core network device in the terrestrial network TN; and
the receiving, by the terminal device, the second message from the first core network device comprises: receiving, by the terminal device, the second message from the first core network device via the second core network device.

16. The method according to claim 15, wherein the terminal device comprises a first subscriber identity module SIM card and a second SIM card, the first SIM card subscribes to a TN service, the second SIM card subscribes to the NTN service, and the method further comprises:
sending, by the second SIM card, the first message to the first SIM card;
sending, by the first SIM card, the first message to an access network device in the TN;
receiving, by the first SIM card, the second message from the access network device in the TN; and
sending, by the first SIM card, the second message to the second SIM card.

17. A method, wherein the method comprises:
when a terminal device completes registration with a non-terrestrial network NTN, determining, by a first core network device in the NTN, that the terminal device enters a first mode, wherein
the terminal device does not need to initiate, in the first mode, periodic registration with the first core network device in the NTN; and
that the terminal device completes the registration with the non-terrestrial network NTN comprises:
receiving, by the first core network device, a first message from the terminal device, wherein the first message is used for requesting registration; and
sending, by the first core network device, a second message to the terminal device, wherein the second message indicates that the first core network device accepts a registration request of the terminal device.

18. The method according to claim 17, wherein the first message comprises first information, wherein
the first information indicates that the terminal device does not ensure that periodic registration is performed; or
the first information indicates that the terminal device requests not to perform periodic registration.

19. The method according to claim 18, wherein the first information comprises first capability information and/or second capability information, the first capability information indicates whether the terminal device has a capability of supporting NTN communication, and the second capability information indicates whether the terminal device has a capability of automatic satellite alignment.

20. The method according to claim 18 or 19, wherein the method further comprises:
determining, by the first core network device, at least one of the following based on the first information:
information indicating whether to accept a preference;
whether a periodic registration timer is activated; and
duration of the periodic registration timer when the periodic registration timer is activated; or
whether to perform implicit deregistration on the terminal device.

21. The method according to any one of claims 17 to 20, wherein
the second message comprises second information, and the second information indicates that after entering the first mode, the terminal device does not need to initiate the periodic registration with the first core network device in the NTN;
or
the second message further comprises third information, the third information indicates first duration, the first duration is duration of the periodic registration timer, and the first duration is related to duration in which the terminal device subscribes to an NTN service; and that the terminal device does not need to initiate, in the first mode, the periodic registration with the first core network device in the NTN comprises: the terminal device does not need to initiate, in the first mode, the periodic registration with the first core network device in the NTN in the first duration;
or
third information indicates that the periodic registration timer is not to be activated.

22. The method according to any one of claims 17 to 21, wherein
the first core network device keeps the terminal device in the first mode in a registered state and/or for no service; or
the first core network device does not need to send a paging message to the terminal device in the first mode.

23. The method according to any one of claims 17 to 22, wherein
the when the terminal device completes the registration with the non-terrestrial network NTN, determining, by the first core network device in the NTN, that the terminal device enters the first mode comprises: when the terminal device completes the registration with the non-terrestrial network NTN and a third condition is satisfied, determining, by the first core network device in the NTN, that the terminal device enters the first mode, wherein
the third condition comprises one or more of the following:
the terminal device switches from a connection management CM connected state to a CM idle state;
the terminal device does not use a network service of the NTN in third duration, wherein the third duration is greater than 0; or
paging the terminal device by the first core network device fails.

24. The method according to claim 23, wherein that the terminal device switches from the connection management CM connected state to the CM idle state comprises:
the terminal device switches from the CM connected state to the CM idle state, and duration in which the terminal device is in the CM idle state is greater than second duration, wherein the second duration is greater than 0.

25. The method according to claim 23 or 24, wherein after the determining, by the first core network device, that the terminal device enters the first mode, the method further comprises:
receiving, by the first core network device, the first message from the terminal device, wherein the first message is used for requesting registration or requesting a service.

26. The method according to any one of claims 17 to 25, wherein the method further comprises:
when a fourth condition is satisfied, determining, by the first core network device, that the terminal device exits the first mode, wherein
the fourth condition comprises one or more of the following:
the first core network device receives the first message from the terminal device, wherein the first message is used for requesting registration or requesting a service; or
the terminal device switches from the CM idle state to the CM connected state.

27. The method according to any one of claims 17 to 26, wherein the first core network device serves only the NTN, or the first core network device serves the NTN and a TN.

28. The method according to any one of claims 17 to 27, wherein the first core network device serves only the NTN;
the receiving, by the first core network device, the first message from the terminal device comprises: receiving, by the first core network device, the first message from the terminal device via a second core network device in the TN; and
the sending, by the first core network device, the second message to the terminal device comprises: sending, by the first core network device, the second message to the terminal device via the second core network device.

29. The method according to any one of claims 17 to 28, wherein the first message further comprises the preference for the first mode, and the second message further comprises information for confirming acceptance of the preference.

30. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor implements the method according to any one of claims 1 to 16 or the method according to any one of claims 17 to 29 through a logic circuit or by executing code instructions.

31. A computer-readable storage medium, wherein the computer-readable storage medium stores a computer program or instructions, and when the computer program or the instructions are executed by a communication apparatus, the method according to any one of claims 1 to 16 or the method according to any one of claims 17 to 29 is implemented.
